# FASCICULE DE BREVET EUROPEEN

(11) **EP 4 078 855 B1**
(45) Date de publication et mention de la délivrance du brevet: **31.01.2024**
(21) Numéro de dépôt: 20823866.7
(22) Date de dépôt: 16.12.2020
(51) Int. Cl.: H04B 10/2575

(54) **INFRASTRUCTURE DE TRANSPORT DE DONNÉES RADIOFRÉQUENCES PAR FIBRE OPTIQUE**
INFRASTRUKTUR FÜR RADIOFREQUENZDATENTRANSPORT ÜBER GLASFASERN
RADIO-FREQUENCY DATA TRANSPORT INFRASTRUCTURE VIA OPTICAL FIBERS

(30) Priorité: 17.12.2019 FR 1914594
(43) Date de publication de la demande: 26.10.2022
(73) Titulaire: LATELEC, 31500 Toulouse (FR)
(72) Inventeur: REBIERE, Yoann, 31520 RAMONVILLE (FR); BACOU, Alexandre, 82700 SAINT PORQUIER (FR)
(74) Mandataire: Ipside
(86) Numéro de dépôt international: PCT/EP2020/086492
(87) Numéro de publication internationale: WO 2021/122795

(56) Documents cités:
- EP-A2- 1 227 605
- WO-A1-2019/224377

## Description

### Domaine de l'invention

La présente invention concerne une infrastructure de transport de données radiofréquences. En particulier, l'infrastructure de transport de données radiofréquences peut être notamment embarquée dans un moyen de transport afin de permettre l'utilisation des équipements dans ledit moyen de transport. L'invention trouve notamment une application avantageuse dans le domaine aéronautique, en particulier pour équiper des cabines passagers d'un aéronef.

### Etat de la technique

Afin d'interconnecter des équipements d'un aéronef entre eux à des fins de communication, les aéronefs actuels sont équipés de nombreux et différents câblages formant un réseau de communication dont l'installation et la maintenance peuvent s'avérer complexes.

Les câblages, principalement électriques, sont ainsi généralement installés tout au long de la cabine dans des zones parfois peu accessibles, généralement disposées sous le plancher ou dans le plafond. Ces câblages doivent en outre être parfaitement maintenus et protégés, notamment des agressions susceptibles de les endommager, telles que par exemple des vibrations, des projections de liquide, des hautes températures, des radiations électromagnétiques....

De plus, chaque équipement distribuant des données à la cabine utilise un câblage spécifique en fonction de l'application souhaitée.

Notamment, afin de véhiculer des données radiofréquences utiles au fonctionnement d'équipements connectés, tels que par exemple des téléphones portables, des capteurs de température sans fil, de présence..., les aéronefs sont équipés de câbles spécifiques, dits câbles coaxiaux rayonnants, installés tout le long de la cabine.

Pour rappel, un câble coaxial rayonnant est un câble coaxial à motif de fentes périodiques dans le conducteur extérieur, fentes par lesquelles des signaux radiofréquences peuvent rayonner vers l'extérieur et vers l'intérieur du câble. Les signaux radiofréquences sont ainsi transmis simultanément le long du câble et dans l'espace environnant. Un câble coaxial rayonnant fonctionne à la fois comme ligne de transmission et comme antenne.

Toutefois, ces câbles coaxiaux rayonnants présentent un coût important, que ce soit en termes de prix, en termes de temps et de contrainte d'installation (un rayon de courbure minimum de 50 mm est requis), en termes d'encombrement (un câble coaxial rayonnant présent un diamètre de l'ordre de 8 mm), ou encore en termes de poids (un câble coaxial rayonnant pèse de l'ordre de 8,5 kg/100 m), le poids impactant le bilan de masse de l'aéronef.

Le document de brevet EP 1227605 A2 décrit un procédé et un système de distribution de signaux de communication sans fil multibande, qui utilise une architecture hybride/ en cascade qui relie une unité principale à plusieurs unités distantes par des fibres optiques. Des signaux RF de liaison descendante dans une pluralité de bandes de fréquence, transmis à partir d'une pluralité de réseaux de communication sans fil, sont reçus puis combinés en un signal RF de liaison descendante combiné au niveau de l'unité principale. Le signal RF de liaison descendante combiné est ensuite divisé en plusieurs parties RF de liaison descendante, qui sont converties en plusieurs signaux optiques de liaison descendante et transmises optiquement aux unités distantes. Au niveau de chaque unité distante, un signal optique de liaison descendante délivré est d'abord reconverti en une partie RF de liaison descendante qui est ensuite séparée en une pluralité de groupes RF de liaison descendante par bande de fréquence. Les groupes RF de liaison descendante sont ensuite combinés et transmis à une antenne de liaison descendante dédiée.

### Exposé de l'invention

La présente invention vise à remédier aux inconvénients précités.

A cet effet, il est proposé par la présente invention une infrastructure de transport de données radiofréquences, selon la revendication 1, destinée à la transmission de données radiofréquences vers des équipements, dans un sens dit du flux descendant, et à la transmission de données radiofréquences depuis les équipements, dans un sens dit du flux montant. L'invention concerne également un aéronef comportant une infrastructure de transport de données radiofréquences selon la revendication 10.

Par données radiofréquences, on entend des données émises préférentiellement dans la plage de fréquences comprise entre 400 MHz et 100 GHz, encore plus préférentiellement entre 400 MHz et 6 GHz.

L'infrastructure de transport de données radiofréquences comporte un boitier de concentration et de configuration, S boîtiers d'interface, N fibres optiques.

Le boitier de concentration et de configuration comporte :
- un premier dispositif de filtrage en fréquence, configuré pour, dans le sens du flux descendant, décomposer un premier signal, dit signal entrant, en N sous-signaux, dits sous-signaux entrants, dans N sous-bandes de fréquences distinctes, N entier ≥ 2,
- N modules de conversion de signaux électriques/optiques, chaque module de conversion étant configuré, dans le sens du flux descendant, pour convertir respectivement un sous-signal entrant en un signal optique, dit signal optique entrant, de longueur d'onde donnée.

Le signal entrant dans le boitier de concentration et de configuration est préférentiellement un signal électrique analogique radiofréquence.

Le premier dispositif de filtrage du boîtier de concentration et de configuration est un dispositif qui permet, dans le sens du flux descendant, de séparer, dans le signal entrant, les signaux qui ont une fréquence dans une bande de fréquences définie et les signaux qui ont une fréquence dans une autre bande de fréquences définie et de les acheminer respectivement vers un module de conversion de signaux électriques/optiques.

De préférence, la première et la deuxième sous-bande de fréquences couvrent la bande de fréquences comprise entre 400 MHz et 6 GHz.

Le boitier de concentration et de configuration comporte autant de modules de conversion qu'il y a de sous-signaux entrants.

Le boitier de concentration et de configuration est couplé, via N fibres optiques, à S boitiers d'interface disposés en série, S entier ≥ 2.

Le nombre de fibres optiques correspond au nombre de modules de conversion du boitier de concentration et de configuration.

Chaque boitier d'interface comporte :
- N coupleurs optiques 1x2,
- N unités de conversion de signaux électriques/optiques,
- un dispositif de recomposition de signal, dit deuxième dispositif de recomposition.

Chaque boîtier d'interface comporte autant d'unités de conversion que des fibres optiques.

Chaque coupleur optique est configuré, dans le sens du flux descendant, pour transmettre respectivement une partie d'un signal optique entrant à une unité de conversion de signaux électriques/optiques, chaque unité de conversion de signaux électriques/optiques étant configurée, dans le sens du flux descendant, pour reconvertir respectivement un signal optique entrant en un sous-signal entrant.

Le deuxième dispositif de recomposition est configuré pour recomposer le signal entrant à partir des N sous-signaux entrants obtenus par les N unités de conversion de signaux électriques/optiques
Le signal entrant recomposé est destiné à être transmis à tout ou partie des équipements. De préférence, le signal entrant recomposé est destiné à être transmis à une antenne configurée pour transmettre ledit signal entrant recomposé à tout ou partie des équipements.

Une telle infrastructure de transport de données radiofréquences permet avantageusement de véhiculer des données radiofréquences vers des équipements, via des fibres optiques.

Une telle infrastructure de transport de données radiofréquences permet de s'affranchir de l'utilisation de câbles rayonnants coaxiaux.

Les équipements visés peuvent être avantageusement des objets connectés ou des équipements électroniques personnels, tels que par exemple des téléphones portables, des tablettes.

Selon des modes de mise en oeuvre particuliers, l'infrastructure de transport de données radiofréquences selon l'invention répond en outre aux caractéristiques suivantes, mises en oeuvre séparément ou en chacune de leurs combinaisons techniquement opérantes.

Dans des modes de réalisation préférés de l'invention, chaque boitier d'interface comporte un deuxième dispositif de filtrage en fréquence, configuré pour, dans le sens du flux montant, décomposer un deuxième signal, dit signal sortant, en N sous-signaux, dits sous-signaux sortants, dans N sous-bandes de fréquences distinctes.

Le signal sortant est préférentiellement un signal électrique analogique radiofréquence provenant d'un ou des plusieurs équipements. Ce signal sortant est préférentiellement capté par au moins une antenne située à proximité du ou des équipements.

Le deuxième dispositif de filtrage du boîtier d'interface est un dispositif qui permet, dans le sens du flux montant, de séparer les signaux qui ont une fréquence dans une bande de fréquences définie et les signaux qui ont une fréquence dans une autre bande de fréquences définie et de les acheminer respectivement vers une unité de conversion de signaux électriques/optiques. De préférence, la première et la deuxième sous-bande de fréquences couvrent la bande de fréquences comprise entre 400 MHz et 6 GHz.

Chaque boitier d'interface comporte autant d'unités de conversion qu'il y a de sous-signaux sortants.

Chaque unité de conversion de signaux électriques/optiques est configurée, dans le sens du flux montant, pour convertir respectivement un sous-signal sortant, provenant du deuxième dispositif de filtrage, en un signal optique, dit signal optique sortant, de longueur d'onde donnée, distincte de la longueur d'onde du signal optique entrant.

Chaque signal optique sortant est respectivement transmis, par une fibre optique, à un module de conversion de signaux électriques/optiques du boitier de concentration et de configuration, chaque module de conversion de signaux électriques/optiques étant configuré, dans le sens du flux montant, pour reconvertir respectivement un signal optique sortant en un sous-signal sortant. Le boitier de concentration et de configuration comporte un dispositif de recomposition de signal, dit premier dispositif de recomposition, configuré pour recomposer le signal sortant à partir des N sous-signaux sortants obtenus par les N modules de conversion de signaux électriques/optiques.

De préférence, l'infrastructure de transport de données radiofréquences est configurée pour décomposer un signal sortant en autant de sous-signaux sortants qu'il y a de sous-signaux entrants provenant de la décomposition du signal entrant.

Les fibres optiques utilisées pour le flux montant sont avantageusement celles utilisées pour le flux descendant.

Une telle infrastructure de transport de données radiofréquences permet avantageusement le transport de données radiofréquences de manière bidirectionnelle.

Une telle infrastructure de transport de données radiofréquences est particulièrement adaptée au réseau mobile.

Selon des modes de réalisation particuliers, chaque module de conversion de signaux électriques/optiques comporte :
- une source laser, dite première source laser,
- une photodiode, dite première photodiode,
- un multiplexeur en longueur d'onde, dit premier multiplexeur.

De tels modules de conversion de signaux électriques/optiques comportent des composants classiques, peu encombrants et simples d'utilisation.

Dans des variantes de réalisation, les premiers multiplexeurs sont indépendants des modules de conversion de signaux électriques/optiques.

Selon des modes de réalisation particuliers, chaque unité de conversion de signaux électriques/optiques comporte :
- une source laser, dite deuxième source laser,
- une photodiode, dite deuxième photodiode,
- un multiplexeur en longueur d'onde, dit deuxième multiplexeur.

De telles unités de conversion de signaux électriques/optiques comportent des composants classiques, peu encombrants et simples d'utilisation.

Dans des variantes de réalisation, les deuxièmes multiplexeurs sont indépendants des unités de conversion de signaux électriques/optiques.

Selon des modes de réalisation particuliers, chaque unité de conversion de signaux électriques/optiques comporte un dispositif d'activation/désactivation de la deuxième source laser.

Selon des modes de réalisation particuliers, chaque boitier d'interface comporte un duplexeur destiné à être agencé entre le deuxième dispositif de filtrage dudit boitier d'interface et l'antenne associée audit boitier d'interface. Un tel duplexeur permet avantageusement d'utiliser une seule et même antenne pour l'émission et la réception d'un signal électrique analogique radiofréquence.

Selon des modes de réalisation particuliers, chaque boitier d'interface comporte un premier amplificateur de gain paramétrable agencé entre le deuxième dispositif de recomposition et le duplexeur ou, lorsque le boîtier d'interface ne comporte pas de duplexeur, entre le deuxième dispositif de recomposition et l'antenne. Un tel premier amplificateur de gain paramétrable permet avantageusement d'homogénéiser la puissance des signaux entrants en sortie de chaque boîtier d'interface.

Selon des modes de réalisation particuliers, chaque boitier d'interface comporte un deuxième amplificateur de gain paramétrable agencé entre le deuxième dispositif de filtrage et le duplexeur ou, lorsque le boîtier d'interface ne comporte pas de duplexeur, entre le deuxième dispositif de filtrage et l'antenne. Un tel deuxième amplificateur de gain paramétrable permet avantageusement d'augmenter si nécessaire la puissance du signal sortant dans chaque boîtier d'interface.

Selon des modes de réalisation particuliers, le premier dispositif de filtrage du boitier de concentration et de configuration et/ou le premier dispositif de recomposition du boitier de concentration et de configuration et/ou le deuxième dispositif de filtrage d'un boitier d'interface et/ou le deuxième dispositif de recomposition d'un boitier d'interface se présente sous la forme d'un diplexeur.

Selon des modes de réalisation particuliers, le premier dispositif de filtrage du boitier de concentration et de configuration et/ou le premier dispositif de recomposition du boitier de concentration et de configuration et/ou le deuxième dispositif de filtrage d'un boitier d'interface et/ou le deuxième dispositif de recomposition d'un boitier d'interface se présente sous la forme d'un triplexeur.

L'invention est également relative à un aéronef comportant une infrastructure de transport de données radiofréquences conforme à au moins l'un de ses modes de réalisation.

Dans des exemples particuliers de réalisation, le signal entrant peut représenter la totalité des signaux électriques analogiques radiofréquences, provenant de différentes unités centrales de service, qui ont été combinés, par exemple par un combineur radiofréquence. Chaque unité centrale de service regroupe et gère des données, notamment radiofréquences, relatives à un service spécifique dans l'aéronef.

Dans des exemples particuliers de réalisation, le signal entrant peut représenter un signal électrique analogique radiofréquence provenant d'une seule des unités centrales de service. Dans ce cas, il est nécessaire de dupliquer, pour chacune des autres unités centrales de service, le boîtier de concentration et de configuration, les boitiers d'interface couplés audit boîtier de concentration et de configuration et les antennes couplés à chaque boîtier d'interface.

### Présentation des figures

L'invention sera mieux comprise à la lecture de la description ci-après, donnée à titre d'exemple nullement limitatif, et faite en référence aux dessins annexés :
La figure 1 représente un exemple de structure de gestion de données embarquée dans un avion, comportant une infrastructure de transport de données radiofréquences selon un mode de réalisation de l'invention,
La figure 2 représente un exemple d'un boîtier de concentration et de configuration d'une infrastructure de transport de données radiofréquences selon un premier mode de réalisation de l'invention,
La figure 3 représente un exemple d'un boîtier d'interface de la figure 2, selon le premier mode de réalisation de l'invention de l'infrastructure de transport de données radiofréquences,
La figure 4 représente une variante de réalisation du premier mode de réalisation de l'infrastructure de transport de données radiofréquences,
La figure 5 représente un exemple d'un boîtier de concentration et de configuration d'une infrastructure de transport de données radiofréquences selon un deuxième mode de réalisation de l'invention,
La figure 6 représente un exemple d'un boîtier d'interface de la figure 5, selon le deuxième mode de réalisation de l'invention de l'infrastructure de transport de données radiofréquences.

### Description détaillée d'un mode de réalisation de l'invention

La présente invention concerne une infrastructure de transport de données radiofréquences 1.

L'infrastructure de transport de données radiofréquences 1 peut, de manière générale, équiper tout moyen de transport, notamment ceux des domaines aéronautique, ferroviaire ou automobile, sans que cela soit restrictif de l'invention. Il peut également être envisageable d'installer une telle infrastructure de transport de données radiofréquences 1 dans des bâtiments. L'invention est décrite dans le contexte particulier d'un de ses domaines d'application préférés dans lequel l'infrastructure de transport de données radiofréquences 1 est embarquée dans un avion de ligne civil. Rien n'exclut cependant de disposer l'infrastructure de transport de données radiofréquences 1 dans tout autre type d'aéronef, qu'il soit civil ou militaire.

Cette infrastructure de transport de données radiofréquences 1 peut notamment avantageusement s'intégrer dans une structure de gestion de données.

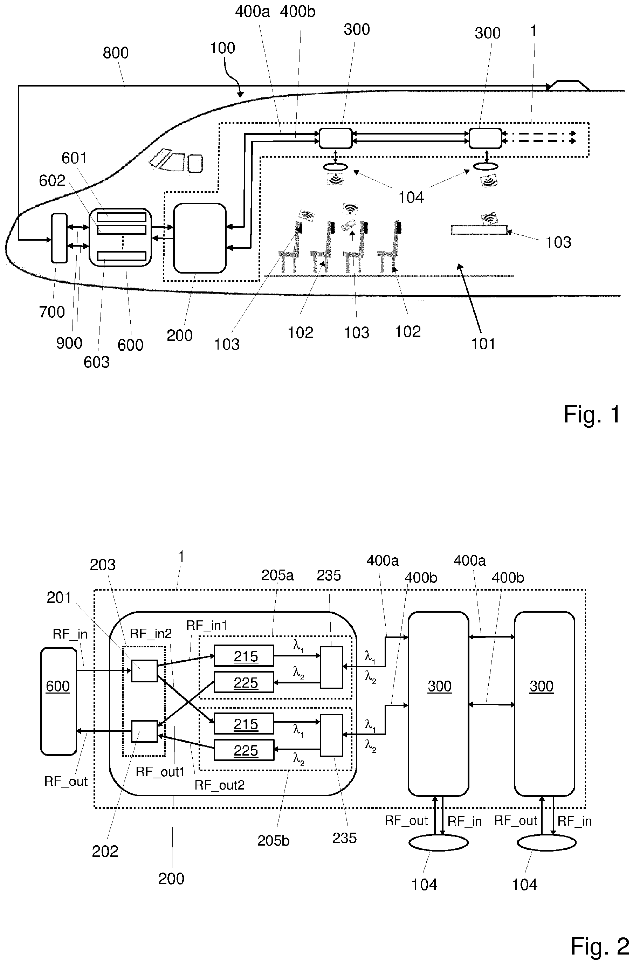

La figure 1 représente schématiquement un exemple non limitatif de structure de gestion de données embarquée dans un avion 100. L'avion 100 comporte, de manière classique, une cabine 101 pour recevoir des passagers et est équipée, entres autres, de sièges passagers 102.

La structure de gestion de données est destinée à permettre une transmission de données vers et depuis des équipements 103.

Les équipements 103 peuvent être de diverses natures :
- des terminaux (écrans fixes) intégrés dans les sièges passagers 102,
- des équipements électroniques personnels, connus sous l'acronyme PED (« Personal Electronic Device » en terminologie anglaise), appartenant aux passagers,
- des équipements techniques critiques et non critiques pour le vol (actionneurs de pompes, détecteurs de température ou de pression, détecteurs de fumée, etc.).

L'ensemble de ces équipements 103 est préférentiellement disposé dans la cabine 101.

Les équipements peuvent dialoguer entre eux via plusieurs catégories de réseaux : 2G/3G/4G, Zigbee, Sigfox,LoRa, Wifi...

La structure de gestion de données comporte :
- un bloc de ressources de données 600,
- une infrastructure de transport de données radiofréquences 1.

La structure de gestion de données peut en outre comporter un routeur 700 configuré par exemple pour communiquer, de manière bidirectionnelle (flèche 800), avec un réseau de communications par satellite SATCOM (« SATellite COMmunication » en terminologie anglaise), comme illustré sur la figure 1. Le routeur 700 est également configuré pour dissocier les différents types de données à transmettre au bloc de ressources de données 600. Le routeur 700 est également configuré par exemple pour communiquer, de manière bidirectionnelle (flèches 900), des signaux électriques radiofréquences, de préférence analogiques, avec le bloc de ressources de données 600.

Le bloc de ressources de données 600 comporte une pluralité d'unités centrales, dites de service 601, 602, 603, chaque unité centrale de service regroupant et gérant les données, notamment radiofréquences, relatives à un service spécifique dans l'avion 100.

Dans un exemple de réalisation, un service est associé à un système de divertissement, connu sous l'acronyme IFE (« In Flight Entertainment » en terminologie anglaise), notamment en liaison avec les terminaux.

Dans un autre exemple de réalisation, un service est associé à un système de communications (internet ou réseau mobile, par exemple), notamment en liaison avec les terminaux et les équipements PED.

Dans un autre exemple de réalisation, un service est associé à un système cabine, notamment en liaison avec les équipements techniques critiques et/ou non critiques pour le vol.

Dans l'exemple de la figure 1, le bloc de ressources de données 600 comporte trois unités centrales de service 601, 602, 603.

Le bloc de ressources de données 600 est préférentiellement disposé dans une baie avionique de l'avion. Le bloc de ressources de données 600 peut se présenter par exemple sous la forme de plusieurs serveurs de données.

L'infrastructure de transport de données radiofréquences 1 permet avantageusement la distribution, dans la cabine 101, de flux descendants et de flux montants de données analogiques radiofréquences, respectivement dans et à partir des équipements 103 de la cabine 101.

Par données radiofréquences, on entend des données émises préférentiellement dans la plage de fréquences comprise entre 400 MHz et 100 GHz, encore plus préférentiellement entre 400 MHz et 6 GHz.

Les flux descendants permettent aux équipements 103 d'exploiter les données analogiques radiofréquences provenant desdites unités centrales de service et les flux montants permettent de transférer des données analogiques radiofréquences auxdites unités centrales de service à partir desdits équipements.

L'infrastructure de transport de données radiofréquences 1 comporte un boîtier de concentration et de configuration 200 et au minimum deux boîtiers d'interface 300. Le boîtier de concentration et de configuration 200 est relié aux divers équipements 103 de la cabine 101 via les boîtiers d'interface 300 montés en série.

Ledit boîtier de concentration et de configuration est couplé à chaque boîtier d'interface, via au moins deux fibres optiques 400a, 400b. Chaque fibre optique 400a, 400b dessert successivement les boîtiers d'interface 300. Chaque boîtier d'interface est couplé respectivement à une antenne 104 couplée elle-même à tout ou partie desdits équipements de l'avion. De préférence, les antennes 104 n'appartiennent pas à l'infrastructure de transport de données radiofréquences. Dans une autre forme de réalisation, les antennes appartiennent à l'infrastructure de transport de données radiofréquences.

Selon des transferts bidirectionnels, le boîtier de concentration et de configuration 200 communique, d'une part, des signaux électriques analogiques radiofréquences avec les unités centrales du bloc de ressources de données 600 et, d'autre part, des signaux optiques avec les boîtiers d'interface 300 via au minimum deux fibres optiques 400a, 400b.

Selon des transferts bidirectionnels, chaque boîtier d'interface communique quant à eux, d'une part, des signaux électriques analogiques radiofréquence avec l'antenne 104 respective associée et, d'autre part, des signaux optiques avec le boîtier de concentration et de configuration 200 via lesdites fibres optiques 400a, 400b.

L'infrastructure de transport de données radiofréquences 1 est préférentiellement intégrée, selon différents modes de réalisation, au plafond et/ou au plancher de la cabine 101.

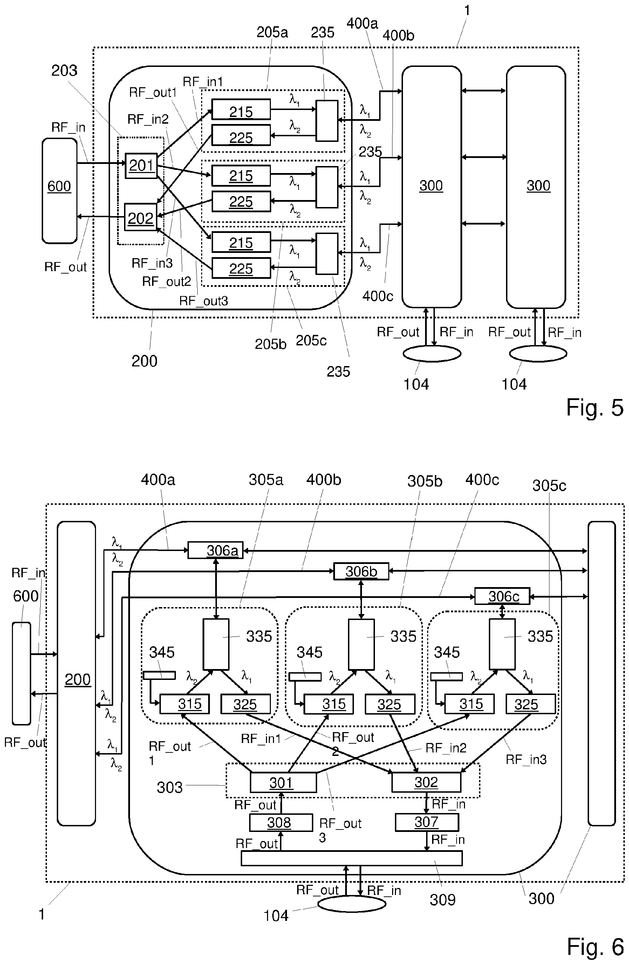

Le boîtier de concentration et de configuration 200, de manière préférentielle, comporte, comme illustré sur les figures 2 et 5 :
- un premier dispositif de filtrage 201 configuré pour décomposer un premier signal, dit signal entrant, en N sous-signaux, dits sous-signaux entrants, dans N sous-bandes de fréquences distinctes, N entier ≥ 2,
- N modules de conversion de signaux électriques/optiques 205a, 205b, 205c,
- un premier dispositif de recomposition 202 de signal.

Dans l'exemple non limitatif des figures 2, 4 et 5, le premier dispositif de filtrage 201 et le premier dispositif de recomposition 202 de signal du boîtier de concentration et de configuration sont préférentiellement, mais de manière non limitative, regroupés dans un dispositif 203, dit premier dispositif de séparation et de combinaison. Chaque module de conversion 205a, 205b, 205c du boîtier de concentration et de configuration 200 comporte :
- une source laser, dite première source laser 215,
- une photodiode, dite première photodiode 225,
- un multiplexeur en longueur d'onde, dit premier multiplexeur 235.

Dans une variante de réalisation, le premier multiplexeur 235 de chaque module de conversion peut être dissocié du module de conversion.

De préférence, tous les modules de conversion du boîtier de concentration et de configuration 200 sont identiques entre eux.

Ledit boîtier de concentration et de configuration est couplé, via N fibres optiques, à S boîtiers d'interface, S entier ≥ 2.

Chaque boîtier d'interface, de manière préférentielle, comporte :
- N coupleurs optiques 1x2,
- N unités de conversion de signaux électriques/optiques 305a, 305b, 305c,
- un deuxième dispositif de filtrage 301 configuré pour décomposer un deuxième signal, dit signal sortant, en N sous-signaux, dits sous-signaux sortants, dans N sous-bandes de fréquences distinctes,
- un deuxième dispositif de recomposition 302 de signal.

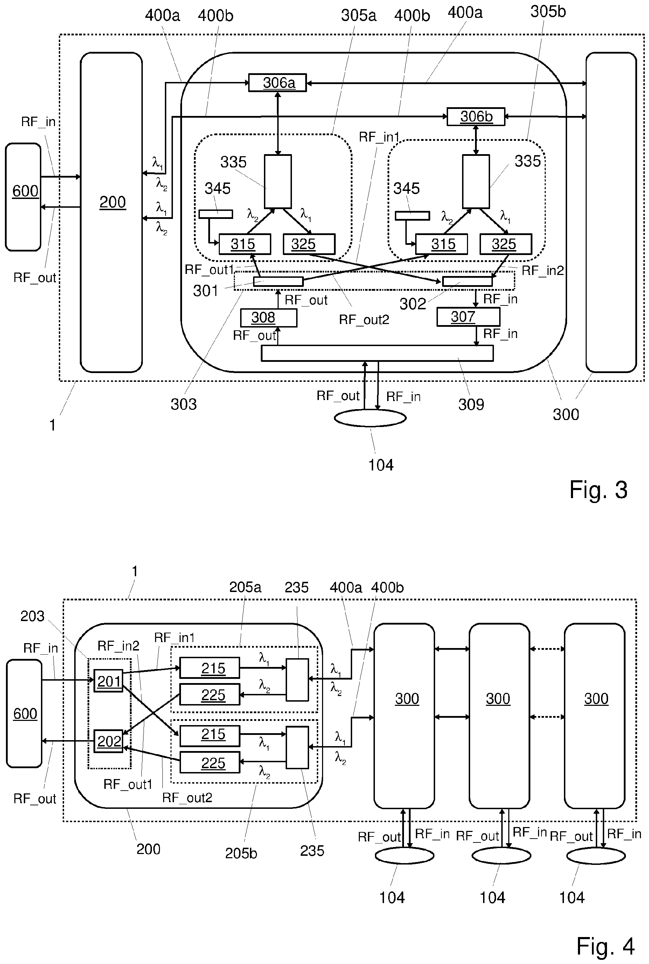

Dans l'exemple non limitatif des figures 3 et 6, le deuxième dispositif de filtrage 301 et le deuxième dispositif de recomposition 302 de signal de chaque boîtier d'interface sont préférentiellement, mais de manière non limitative, regroupés dans un dispositif 303, dit deuxième dispositif de séparation et de combinaison.

Chaque unité de conversion 305a, 305b, 305c d'un boîtier d'interface 300 comporte :
- une source laser, dite deuxième source laser 315,
- une photodiode, dite deuxième photodiode 325,
- un multiplexeur en longueur d'onde, dit deuxième multiplexeur 335,

Dans une variante de réalisation, le deuxième multiplexeur 335 de chaque unité de conversion peut être dissocié de l'unité de conversion.

Chaque unité de conversion 305a, 305b, 305c d'un boîtier d'interface 300 peut comporter préférentiellement un dispositif d'activation/désactivation 345 de la deuxième source laser 315.

De préférence, toutes les unités de conversion des boîtiers d'interface 300 sont identiques entre elles.

De préférence, tous les boîtiers d'interface 300 de l'infrastructure de transport de données radiofréquences 1 sont identiques entre eux.

L'infrastructure de transport de données radiofréquences 1 va être à présente décrite de manière détaillée dans un premier mode de réalisation, illustré par les figures 2 à 4 où le nombre N est égal à 2. Le premier dispositif de filtrage 201 et le premier dispositif de recomposition 202 de signal du boîtier de concentration et de configuration se présente chacun avantageusement sous la forme d'un diplexeur. Le deuxième dispositif de filtrage 301 et le deuxième dispositif de recomposition 302 de signal de chaque boîtier d'interface se présente également chacun sous la forme d'un diplexeur.

Les figures 2 et 3 illustrent l'exemple où le nombre S de boîtiers d'interface 300 est de 2. La figure 4 illustre l'exemple où le nombre S de boîtiers d'interface 300 est d'au moins 3.

Dans ce premier mode de réalisation, le boîtier de concentration et de configuration 200 présente ainsi, comme illustré sur la figure 2 :
- le premier dispositif de filtrage 201, sous la forme d'un diplexeur,
- deux modules de conversion de signaux électriques/optiques, dits premier 205a et deuxième 205b modules de conversion,
- le premier dispositif de recomposition 202 de signal, sous la forme d'un diplexeur.

De préférence, le premier dispositif de filtrage 201 est préférentiellement de type passe bas / passe haut.

Chaque boîtier d'interface 300 comporte, comme illustré sur la figure 3 :
- deux coupleurs optiques 1x2, dits premier 306a et deuxième 306b coupleurs,
- deux unités de conversion de signaux électriques/optiques, dites première 305a et deuxième 305b unités de conversion,
- le deuxième dispositif de filtrage 301, sous la forme d'un diplexeur,
- le deuxième dispositif de recomposition 302 de signal, sous la forme d'un diplexeur.

De préférence, le deuxième dispositif de filtrage 301 est préférentiellement de type passe bas / passe haut.

Le rôle et le fonctionnement des différents éléments composant l'interface de transport de données radiofréquences sera décrit dans un premier temps pour une transmission de données radiofréquences dans le sens d'un flux descendant (du bloc de ressources de données 600 vers les antennes 104 situées en cabine 101) et dans un second temps, pour une transmission de données radiofréquences dans le sens d'un flux montant (des antennes 104 situées en cabine 101 de l'avion 100 vers le bloc de ressources de données 600).

### Sens du flux descendant

Le premier dispositif de filtrage 201 du boîtier de concentration et de configuration est agencé et configuré pour recevoir un signal électrique analogique radiofréquence, dit signal entrant RF_in.

Dans une première version de réalisation, non limitative, le signal entrant RF_in peut représenter la totalité des signaux électriques analogiques radiofréquences provenant des différentes unités centrales de service 601, 602, 603, qui ont été combinés.

Dans une telle première version de réalisation, un combineur radiofréquence est préférentiellement utilisé pour combiner tous les signaux électriques analogiques radiofréquences provenant des différentes unités centrales de service 601, 602, 603 en un seul signal, le signal entrant RF_in.

Dans une première forme de mise en oeuvre de cette première version, le bloc de ressources de données 600 comporte le combineur radiofréquence, disposé en sortie des différentes unités centrales de service 601, 602, 603.

Dans une deuxième forme de mise en oeuvre de cette première version, le boîtier de concentration et de configuration comporte le combineur radiofréquence, disposé en amont du premier dispositif de séparation et de combinaison 203.

Dans une deuxième version de réalisation, non limitative, le signal entrant RF_in peut représenter un signal électrique analogique radiofréquence provenant d'une seule des unités centrales de service.

Dans cette deuxième version, il est nécessaire de dupliquer, pour chacune des autres unités centrales de service, le boîtier de concentration et de configuration 200, les boitiers d'interface 300 couplés audit boîtier de concentration et de configuration 200 et les antennes 104 couplées à chaque boîtier d'interface.

Dans l'exemple illustré sur les figures 1 à 5, et de manière non limitative, on considère que le signal entrant RF_in représente la totalité des signaux électriques analogiques radiofréquences provenant des différentes unités centrales de service 601, 602, 603, qui ont été combinés. Le combineur radiofréquence est disposé dans le bloc de ressources de données 600. Le signal entrant RF_in provient ainsi du bloc de ressources de données 600, comme illustré sur les figures 2 à 5.

Le premier dispositif de filtrage 201 du boîtier de concentration et de configuration 200 est agencé et configuré pour filtrer, sur la base des fréquences radio, le signal entrant RF_in, en :
- un premier sous-signal entrant RF_in1, dont la fréquence est située dans une première sous-bande de fréquences, et
- un deuxième sous-signal entrant RF_in2 dont la fréquence est située dans une deuxième sous-bande de fréquences.

Les premier et deuxième sous-signaux entrants RF_in1, RF_in2 sont respectivement transmis au premier module de conversion 205a et au deuxième module de conversion 205b.

Les première et deuxième sous-bandes de fréquences sont distinctes et sans recouvrement.

De préférence, la première et la deuxième sous-bande de fréquences couvrent la bande de fréquences comprise entre 400 MHz et 6 GHz.

Dans un exemple préféré de réalisation, la première sous-bande de fréquences correspond à la plage de fréquences comprise entre 400 MHz et 999,9 MHz et la deuxième sous-bande de fréquences correspond à la plage de fréquences comprise entre 1 et 6 GHz.

En d'autres termes, le premier dispositif de filtrage 201 du boîtier de concentration et de configuration est un dispositif qui permet, dans le sens du flux descendant, de séparer les signaux qui ont une fréquence dans une bande de fréquences définie et les signaux qui ont une fréquence dans une autre bande de fréquences définie et de les acheminer sur deux voies différentes.

Chaque module de conversion du boîtier de concentration et de configuration 200 a pour rôle, dans le sens du flux descendant, de convertir des signaux électriques analogiques radiofréquences reçus en signaux optiques.

Le premier module de conversion 205a convertit avantageusement le premier sous-signal entrant RF_in1 provenant du premier dispositif de filtrage 201 en un premier signal optique entrant, de longueur d'onde λ1.

Le premier sous-signal entrant RF_in_1 est préférentiellement converti par la première source laser 215 du premier module de conversion 205a. Ladite première source laser 215 du premier module de conversion émet, en sortie, le premier signal optique entrant, de longueur d'onde λ1.

Par analogie, le deuxième module de conversion 205b convertit avantageusement le deuxième sous-signal entrant RF _in2 provenant du premier dispositif de filtrage 201 en un deuxième signal optique entrant, de longueur d'onde λ1.

Le deuxième sous-signal entrant RF_in_2 est préférentiellement converti par la première source laser 215 du deuxième module de conversion 205b. Ladite première source laser 215 du deuxième module de conversion émet, en sortie, le deuxième signal optique entrant, de longueur d'onde λ1.

Pour assurer la transmission bidirectionnelle des signaux dans chaque fibre optique, chaque module de conversion comporte en outre le premier multiplexeur 235.

Ainsi, le premier signal optique entrant, de longueur d'onde λ1 est transmis au premier multiplexeur 235 du premier module de conversion 205a avant sa transmission dans la première fibre optique 400a. De même, le deuxième signal optique entrant, de longueur d'onde λ1 est transmis au premier multiplexeur 235 du deuxième module de conversion 205b avant sa transmission dans la deuxième fibre optique 400b.

En sortie du premier module de conversion 205a, le premier signal optique entrant, de longueur d'onde λ1, est transmis, via une première fibre optique 400a, à chaque boîtier d'interface 300.

En sortie du deuxième module de conversion 205b, le deuxième signal optique entrant, de longueur d'onde λ1, est transmis, via une deuxième fibre optique 400b, à chaque boîtier d'interface 300.

Les longueurs d'onde des signaux optiques entrants dans chaque fibre optique 400a, 400b sont préférentiellement choisies de sorte à être identiques. Un tel choix permet avantageusement d'utiliser des unités de conversion identiques dans chaque boîtier d'interface 300.

Dans un exemple de réalisation, les deux fibres optiques 400a, 400b sont préférentiellement monomodes. Cependant, rien n'exclut d'avoir recours à des fibres optiques multimodes. De préférence, les fibres optiques sont identiques. Dans un exemple non limitatif de réalisation, la longueur d'onde λ1 dans chaque fibre optique est de 1310 nm. Rien n'exclut cependant d'utiliser d'autres longueurs d'onde, notamment toutes celles comprises entre 1270 nm et 1550nm, sans que cela soit restrictif de l'invention.

Chaque boîtier d'interface 300 étant identique, seul le fonctionnement d'un boîtier d'interface sera décrit de manière illustrée. Les autres boîtiers d'interface 300 fonctionnent de manière analogue.

Chaque coupleur optique du boitier d'interface 300 est couplé à une fibre optique.

Le premier coupleur 306a est avantageusement agencé et configuré pour :
- recevoir le premier signal optique entrant, de longueur d'onde λ1, transporté par la première fibre optique 400a, et
- transmettre d'une part une partie dudit premier signal optique entrant vers le premier coupleur 306a du boîtier d'interface suivant et d'autre part l'autre partie dudit premier signal optique entrant vers la première unité de conversion 305a.

Par analogie, le deuxième coupleur 306b est avantageusement agencé et configuré pour :
- recevoir le deuxième signal optique entrant, de longueur d'onde λ1, transporté par la deuxième fibre optique 400b, et
- transmettre d'une part une partie dudit deuxième signal optique entrant vers le deuxième coupleur 306b du boîtier d'interface suivant et d'autre part l'autre partie dudit deuxième signal optique entrant vers la deuxième unité de conversion 305b.

De préférence, les deux coupleurs optiques sont identiques. Chaque coupleur optique est par exemple un coupleur optique 80/20, c'est-à-dire que 80% du signal optique entrant est transmis au boîtier d'interface suivant et que 20% du signal optique entrant est transmis à l'unité de conversion associée.

Chaque unité de conversion du boîtier d'interface 300 a pour rôle, dans le sens du flux descendant, de convertir des signaux optiques en signaux électriques analogiques radiofréquences.

La première unité de conversion 305a reconvertit avantageusement le premier signal optique entrant, de longueur d'onde λ1, en premier sous-signal entrant RF_in1.

Le premier signal optique entrant est préférentiellement converti en premier sous-signal entrant RF_in1 par la deuxième photodiode 325 de la première unité de conversion 305a.

Par analogie, la deuxième unité de conversion 305b reconvertit avantageusement le deuxième signal optique entrant, de longueur d'onde λ1, en deuxième sous-signal entrant RF_in2.

Le deuxième signal optique entrant est préférentiellement converti en deuxième sous-signal entrant RF_in2 par la deuxième photodiode 325 de la deuxième unité de conversion 305b.

Pour assurer la transmission bidirectionnelle des signaux dans chaque fibre optique, chaque unité de conversion comporte en outre le deuxième multiplexeur 335.

Ainsi, le premier signal optique entrant, de longueur d'onde λ1, est transmis au deuxième multiplexeur 335 de la première unité de conversion 305a avant sa transmission à la deuxième photodiode 325 de ladite première unité de conversion. De même, le deuxième signal optique entrant, de longueur d'onde λ1, est transmis au deuxième multiplexeur 335 de la deuxième unité de conversion 305b avant sa transmission à la deuxième photodiode 325 de ladite deuxième unité de conversion.

En sortie de la première unité de conversion 305a, le premier sous-signal entrant RF_in1 est transmis, au deuxième dispositif de recomposition 302 de signal.

En sortie de la deuxième unité de conversion 305b, le deuxième sous-signal entrant RF_in2 est également transmis, au deuxième dispositif de recomposition 302 de signal.

Le deuxième dispositif de recomposition 302 de signal est avantageusement agencé et configuré pour recevoir et combiner le premier sous-signal entrant RF_in1, provenant de la première unité de conversion 305a, et le deuxième sous-signal entant RF_in2, provenant de la deuxième unité de conversion 305b, en signal entrant RF_in.

Le deuxième dispositif de recomposition 302 de signal est un dispositif qui permet, dans le sens du flux descendant, de recomposer le signal entrant RF_in à partir du premier sous-signal entrant RF_in1 et du deuxième sous-signal entrant RF_in2.

Le signal entrant recomposé, en sortie du deuxième dispositif de recomposition 302 de signal, donc en sortie du boitier d'interface 300 est ensuite destiné à être transmis à tout ou partie des équipements 103 de l'avion 100.

De préférence, le signal entrant recomposé, en sortie du deuxième dispositif de recomposition 302 de signal, est ensuite transmis à une antenne 104 d'émission destinée à et configurée pour transmettre le signal entrant RF_in à tout ou partie des équipements 103 de l'avion 100.

Dans une variante préférée de réalisation, comme illustré sur la figure 3, le boîtier d'interface comporte un duplexeur 309. Le duplexeur 309 est préférentiellement agencé entre le deuxième dispositif de recombinaison 302 de signal et l'antenne 104 associée. Plus précisément, le duplexeur 309 est préférentiellement agencé entre le deuxième dispositif de séparation et de combinaison 303 et l'antenne 104 associée. Un tel duplexeur 309 permet avantageusement d'utiliser une seule et même antenne 104 pour l'émission et la réception d'un signal électrique.

Le duplexeur 309 est avantageusement conçu pour fonctionner dans la plage de fréquences d'émission et de réception de ladite antenne.

De manière optionnelle, comme illustré sur la figure 3, si la puissance du signal entrant RF_in en sortie du deuxième diplexeur 303 est faible, le boîtier d'interface 300 peut comporter un premier amplificateur de gain 307 paramétrable. Ce premier amplificateur de gain 307 paramétrable est préférentiellement agencé entre ledit deuxième dispositif de séparation et de combinaison 303 et le duplexeur 309 dudit boîtier d'interface, ou entre le deuxième dispositif de séparation et de combinaison 303et l'antenne 104 (si le boîtier d'interface ne comporte pas de duplexeur 309), pour augmenter ladite puissance du signal entrant RF_in.

Chaque boîtier d'interface 300 transmet à l'antenne 104 associée, le signal entrant RF_in recomposé.

Le recours à un premier amplificateur de gain 307 paramétrable dans chaque boîtier d'interface peut permettre avantageusement d'homogénéiser la puissance de tous les signaux entrants RF_in en sortie de chaque boîtier d'interface.

Ainsi, l'infrastructure de transport de données radiofréquences 1 permet, dans le sens de flux descendant, de transmettre un signal entrant RF_in, provenant, dans l'exemple non limitatif décrit et associé aux figures, du bloc de ressources de données 600, à l'ensemble des antennes 104 présentes dans l'avion, via les boîtiers d'interface 300. Le signal entrant RF_in peut alors être diffusé dans tout l'avion 100 et reçu par tous les équipements 103.

### Sens du flux montant

Un signal électrique analogique radiofréquence, dit signal sortant RF_out, provenant d'au moins un des équipements 103 est capté par une des antennes 104 présentes dans l'avion.

De préférence, tout ou partie des antennes 104 présentes dans l'avion 100 sont configurées pour capter un signal analogique radiofréquence dont la fa fréquence est comprise entre 400 MHz et 6 GHz.

Le signal sortant RF_out capté est transmis au deuxième dispositif de filtrage 301, ou, si le boîtier d'interface comporte un duplexeur 309, audit duplexeur dudit boîtier d'interface associé à ladite antenne puis transmis au deuxième dispositif de filtrage 301.

De manière optionnelle, comme illustré sur la figure 3, si la puissance du signal sortant RF_out en amont du deuxième diplexeur 303 est faible, le boîtier d'interface peut comporter un deuxième amplificateur de gain 308 paramétrable. Ce deuxième amplificateur de gain 308 paramétrable est préférentiellement agencé entre ledit deuxième dispositif de filtrage 301 et le duplexeur 309 dudit boîtier d'interface, ou entre le deuxième dispositif de filtrage 301 et l'antenne 104 (si le boîtier d'interface ne comporte pas de duplexeur 309), pour augmenter ladite puissance du signal sortant RF_out.

Le deuxième dispositif de filtrage 301 du boîtier d'interface est agencé et configuré pour, dans le sens du flux montant, recevoir et filtrer, sur la base des fréquences radio, le signal sortant RF_out, en :
- un premier sous-signal sortant RF_out1, dont la fréquence est située dans une première sous-bande de fréquences, et
- un deuxième sous-signal sortant RF_out2 dont la fréquence est située dans une deuxième sous-bande de fréquences.

Les premier et deuxième sous-signaux sortants RF_out1, RF_out2 sont ensuite respectivement transmis à la première unité de conversion 305a et à la deuxième unité de conversion 305b.

Les première et deuxième sous-bandes de fréquences sont distinctes et sans recouvrement.

De préférence, la première et la deuxième sous-bande de fréquences couvrent la bande de fréquences comprise entre 400 MHz et 6 GHz.

Dans un exemple préféré de réalisation, la première sous-bande de fréquences correspond à la plage de fréquence comprise entre 400 et 999,9 MHz et la deuxième sous-bande de fréquences correspond à la plage de fréquence comprise entre 1 et 6 GHz.

En d'autres termes, le deuxième dispositif de filtrage 301 du boîtier d'interface est un dispositif qui permet, dans le sens du flux montant, de séparer les signaux qui ont une fréquence dans une bande de fréquences définie et les signaux qui ont une fréquence dans une autre bande de fréquences définie et de les acheminer sur deux voies différentes.

De préférence, le deuxième dispositif de filtrage 301 du boîtier d'interface est sensiblement identique au premier dispositif de filtrage 201 du boîtier de concentration et de configuration.

Chaque unité de conversion du boîtier d'interface a pour rôle, dans le sens du flux montant, de convertir des signaux électriques analogiques radiofréquences reçus en signaux optiques.

La première unité de conversion 305a convertit avantageusement le premier sous-signal sortant RF_out1 provenant du deuxième dispositif de filtrage 301 en un premier signal optique sortant, de longueur d'onde λ2.

Le premier sous-signal sortant RF out_1 est préférentiellement converti par la deuxième source laser 315 de la première unité de conversion 305a. Ladite deuxième source laser émet, en sortie, le premier signal optique sortant, de longueur d'onde λ2.

Par analogie, la deuxième unité de conversion 305b convertit avantageusement le deuxième sous-signal sortant RF_out2 provenant du deuxième dispositif de filtrage 301 en un deuxième signal optique sortant, de longueur d'onde λ2.

Le deuxième sous-signal sortant RF_out_2 est préférentiellement converti par une deuxième source laser 315 de la deuxième unité de conversion 305b. Ladite deuxième source laser émet, en sortie, le deuxième signal optique sortant, de longueur d'onde λ2.

Le premier signal optique sortant, de longueur d'onde λ2 est transmis au deuxième multiplexeur 335 de la première unité de conversion 305a avant sa transmission dans la première fibre optique 400a. De même, le deuxième signal optique sortant, de longueur d'onde λ2 est transmis au deuxième multiplexeur 335 de la deuxième unité de conversion 305b avant sa transmission dans la deuxième fibre optique 400b.

En sortie de la première unité de conversion 305a, le premier signal optique sortant, de longueur d'onde λ2 est transmis au premier coupleur 306a qui transmet, à son tour, via la première fibre optique 400a, au boîtier de concentration et de configuration 200.

En sortie de la deuxième unité de conversion 305b, le deuxième signal optique sortant, de longueur d'onde λ2, est transmis au deuxième coupleur 306b qui transmet, à son tour, via la deuxième fibre optique 400b, au boîtier de concentration et de configuration.

Les longueurs d'onde des signaux optiques sortants dans chaque fibre optique sont préférentiellement choisies de sorte à être identiques. Un tel choix permet d'utiliser des modules de conversion identiques dans la boite de concentration et de configuration.

Dans un exemple non limitatif de réalisation, la longueur d'onde λ2 est de 1550 nm. Rien n'exclut cependant d'utiliser d'autres longueurs d'onde, notamment toutes celles comprises entre 1270 nm et 1550nm, sans que cela soit restrictif de l'invention.

Le premier coupleur 306a est configuré pour transmettre le premier signal optique sortant, de longueur d'onde λ2, au premier multiplexeur 235 du premier module de conversion 205a.

Par analogie, le deuxième coupleur 306b est configuré pour transmettre le deuxième signal optique sortant, de longueur d'onde λ2, au premier multiplexeur 235 du deuxième module de conversion 205b.

Chaque module de conversion du boîtier d'interface a pour rôle, dans le sens du flux montant, de convertir des signaux optiques en signaux électriques analogiques radiofréquences.

Le premier module de conversion 205a reconvertit avantageusement le premier signal optique sortant, de longueur d'onde λ2, provenant du premier multiplexeur 235 associé, en premier sous-signal sortant RF_out1.

Le premier signal optique sortant est préférentiellement converti en premier sous-signal sortant RF_out1 par la première photodiode 225 du premier module de conversion 205a.

Par analogie, le deuxième module de conversion 205b reconvertit avantageusement le deuxième signal optique sortant, de longueur d'onde λ2, provenant du premier multiplexeur 235 associé, en deuxième sous-signal sortant RF_out2.

Le deuxième signal optique sortant est préférentiellement converti en deuxième sous-signal sortant RF_out2 par la première photodiode 225 du deuxième module de conversion 205b.

En sortie du premier module de conversion 205a, le premier sous-signal sortant RF_out1 est transmis au premier dispositif de recomposition 202 de signal du boîtier de concentration et de configuration 200.

En sortie du deuxième module de conversion 205b, le deuxième sous-signal sortant RF_out2 est également transmis audit premier dispositif de recomposition 202 de signal.

Ledit premier dispositif de recomposition 202 de signal est avantageusement agencé et configuré pour, dans le sens du flux montant, recevoir et combiner le premier sous-signal sortant RF_out1, provenant du premier module de conversion 205a, et le deuxième sous-signal sortant RF_out2, provenant du deuxième module de conversion 205b, en signal sortant RF_out.

Le premier dispositif de recomposition 202 de signal permet, dans le sens du flux montant, de recomposer le signal sortant RF_out à partir du premier sous-signal sortant RF_out1 et du deuxième sous-signal sortant RF_out2.

Le signal sortant RF_out recomposé, en sortie du premier dispositif de recomposition 202 de signal du boîtier de concentration et de configuration, est ensuite transmis au bloc de ressources de données 600.

Une telle infrastructure de transport de données radiofréquences 1 permet avantageusement le transfert bidirectionnel des données vers ou à destination des équipements 103 de la cabine, via des fibres optiques. Une application préférentiellement ciblée est le réseau mobile.

Dans un exemple préféré de réalisation, chaque unité de conversion d'un boîtier d'interface 300 comporte un dispositif d'activation/désactivation de la deuxième source laser 315.

Un tel dispositif d'activation/désactivation est avantageux, pour le transport des données dans le sens du flux montant, lorsqu'un signal sortant RF_out provenant d'un des équipements 103 est capté par plusieurs antennes 104, chacune desdites antennes étant indépendamment reliée à un boîtier d'interface.

### Cas où l'infrastructure de transport de données radiofréquences 1 ne comporte que deux boîtiers d'interface 300

Dans un tel cas, pour éviter que les deuxièmes sources laser des premières unités de conversion des deux boîtiers d'interface 300 transmettent le même premier sous-signal sortant RF_out1 sur la même première fibre optique 400a, seule la deuxième source laser de la première unité de conversion d'un des deux boîtiers d'interface 300 est activée. La deuxième source laser de la première unité de conversion de l'autre boîtier d'interface 300 est désactivée. De même, pour éviter que les deuxièmes sources laser des deuxièmes unités de conversion des deux boîtiers d'interface 300 transmettent le même deuxième sous-signal sortant RF_out2 sur la même deuxième fibre optique 400b, seule la deuxième source laser de la deuxième unité de conversion d'un des deux boîtiers d'interface 300 est activée. La deuxième source laser de la deuxième unité de conversion de l'autre boîtier d'interface 300 est désactivée. Dans une forme non limitative de mise en oeuvre, dans un premier boîtier d'interface, la deuxième source laser 315 de la première unité de conversion 305a est activée et la deuxième source laser 315 de la deuxième unité de conversion 305b est désactivée, tandis que dans l'autre boîtier d'interface, la deuxième source laser 315 de la première unité de conversion 305a est désactivée et la deuxième source laser 315 de la deuxième unité de conversion 305b est activée.

### Cas où l'infrastructure de transport de données radiofréquences 1 comporte plus de deux boîtiers d'interface 300

Dans un tel cas, pour éviter que les deuxièmes sources laser des premières unités de conversion de tous les boîtiers d'interface 300 transmettent le même premier sous-signal sortant RF_out1 sur la même première fibre optique 400a, seule la deuxième source laser de la première unité de conversion 305a d'un premier boîtier d'interface est activée. Toutes les deuxièmes sources laser des premières unités de conversion des autres boîtiers d'interface 300 sont désactivées.

De même, pour éviter que les deuxièmes sources laser des deuxièmes unités de conversion de tous les boîtiers d'interface 300 transmettent le même deuxième sous-signal sortant RF_out2 sur la même deuxième fibre optique 400b, seule la deuxième source laser de la deuxième unité de conversion 305b d'un autre boîtier d'interface autre que le premier boîtier d'interface est activée. Toutes les deuxièmes sources laser des deuxièmes unités de conversion des autres boîtiers d'interface 300 sont désactivées.

En d'autres termes, seuls deux boîtiers d'interface 300 sur la totalité des boîtiers d'interface 300 seront fonctionnels, dans le sens du flux montant.

Quel que soit le nombre de boîtiers d'interface 300 dans l'infrastructure de transport de données radiofréquence, le choix de l'activation/désactivation des deuxièmes sources laser est programmé lors de l'installation des boîtiers d'interface 300 dans l'avion, en fonction de leur emplacement dans la cabine 101 de l'avion. Ce choix peut être modifié par la suite.

De préférence, les dispositifs d'activation/désactivation des deuxièmes sources laser sont contrôlés électroniquement.

Ainsi, sur chaque fibre optique, est transmis un unique sous-signal sortant.

L'infrastructure de transport de données radiofréquences 1 a été décrite dans le cadre d'une décomposition du signal entrant, respectivement du signal sortant, en deux sous-signaux, sans que cela soit limitatif de l'invention. De manière générale, le signal entrant ou sortant, (sens du flux descendant ou montant), peut être décomposé en plus de deux sous-bandes.

Dans ce cas, le boitier de concentration et de configuration comporte autant de modules de conversion qu'il y a de sous-signaux entrants. Il y a autant de fibres optiques que de modules de conversion et chaque boîtier d'interface comporte autant d'unités de conversion que des fibres optiques.

Les figures 5 et 6 illustrent un deuxième mode de réalisation de l'infrastructure de transport de données radiofréquences 1, où le nombre N est égal à 3. Le premier dispositif de filtrage 201 et le premier dispositif de recomposition 202 de signal du boîtier de concentration et de configuration se présente chacun sous la forme d'un triplexeur. Le deuxième dispositif de filtrage 301 et le deuxième dispositif de recomposition 302 de signal de chaque boîtier d'interface se présente également chacun sous la forme d'un triplexeur.

Les figures 5 et 6 illustrent l'exemple où le nombre S de boîtiers d'interface 300 est de deux. Il est clair que ce mode de réalisation s'applique également au cas où le nombre S de boîtiers d'interface 300 est d'au moins trois.

Dans ce deuxième mode de réalisation, le boîtier de concentration et de configuration 200 présente ainsi, comme illustré sur la figure 5 :
- le premier dispositif de filtrage 201, sous la forme d'un triplexeur,
- trois modules de conversion de signaux électriques/optiques, dits premier 205a, deuxième 205b et troisième 205c modules de conversion,
- le premier dispositif de recomposition 202 de signal, sous la forme d'un triplexeur.

Un boîtier d'interface 300 comporte, comme illustré sur la figure 6 (et par extension tous les boitiers d'interface 300) :
- trois coupleurs optiques 1x2, dits premier 306a, deuxième 306b et troisième 306c coupleurs,
- trois unités de conversion de signaux électriques/optiques, dites première 305a, deuxième 305b et troisième 305c unités de conversion,
- le deuxième dispositif de filtrage 301, sous la forme d'un triplexeur,
- le deuxième dispositif de recomposition 302 de signal, sous la forme d'un triplexeur.

Le rôle et le fonctionnement des différents éléments composant ce deuxième mode de réalisation de l'interface de transport de données radiofréquences est identique à celui décrit pour le premier mode de réalisation, que ce soit dans le sens du flux descendant ou dans le sens d'un flux montant.

### Dans le sens du flux descendant

De manière résumée, le premier dispositif de filtrage 201 est avantageusement configuré pour permettre la décomposition du signal entrant RF_in en trois sous-signaux entrants qui sont respectivement acheminé vers le premier, deuxième et troisième module de conversion. Le signal entrant RF_in est décomposé en :
- un premier sous-signal entrant RF_in1, dont la fréquence est située dans une première sous-bande de fréquences, et
- un deuxième sous-signal entrant RF_in2 dont la fréquence est située dans une deuxième sous-bande de fréquences,
- un troisième sous-signal entrant RF_in3 dont la fréquence est située dans une troisième sous-bande de fréquences.

Les première deuxième et troisième sous-bandes de fréquences sont distinctes et sans recouvrement.

De préférence, la première, la deuxième et la troisième sous-bandes de fréquences couvrent la bande de fréquences comprise entre 400 MHz et 3 GHz.

Le premier module de conversion 205a convertit le premier sous-signal entrant RF_in1 en un premier signal optique entrant, de longueur d'onde λ₁. Le deuxième module de conversion 205b convertit le deuxième sous-signal entrant RF_in2 en un deuxième signal optique entrant, de longueur d'onde λ₁. Le troisième module de conversion 205c convertit le troisième sous-signal entrant RF_in3 en un troisième signal optique entrant, de longueur d'onde λ₁.

Chaque signal optique entrant est transmis, par une fibre optique associée, aux différents boîtiers d'interface 300, comme illustré sur la figure 5. La première fibre optique 400a transporte le premier signal optique entrant de longueur d'onde λ₁ porteur du premier sous-signal entrant RF_in1. La deuxième fibre optique 400b transporte le deuxième signal optique entrant de longueur d'onde λ₁ porteur du deuxième sous-signal entrant RF_in2. Une troisième fibre optique 400c transporte le troisième signal optique entrant de longueur d'onde λ₁ porteur du troisième sous-signal entrant RF_in3.

Dans chaque boitier d'interface 300 :
- le premier coupleur 306a transmet une partie du premier signal optique à la première unité de conversion 305a qui reconvertit le premier signal optique de longueur d'onde λ1 en premier sous-signal entrant RF_in1,
- le deuxième coupleur 306b transmet une partie du deuxième signal optique à la deuxième unité de conversion 305b qui reconvertit ledit deuxième signal optique de longueur d'onde λ1 en deuxième sous-signal entrant RF_in2,
- le troisième coupleur 306c transmet une partie du troisième signal optique à la troisième unité de conversion 305c qui reconvertit le troisième signal optique de longueur d'onde λ1 en troisième sous-signal entrant RF_in3.

Le deuxième dispositif de recomposition 302 de signal est avantageusement agencé et configuré pour recevoir et combiner le premier sous-signal entrant RF_in1, le deuxième sous-signal entant RF_in2 et le troisième sous-signal entant RF_in3 en signal entrant RF_in.

Le signal entrant RF_in est transmis aux équipements via l'antenne 104.

### Dans le sens du flux montant

De manière résumée, le signal sortant RF_out provenant d'un ou de plusieurs équipements est capté par une ou plusieurs antennes, chaque antenne étant reliée à un boitier d'interface 300.

Pour chaque boitier d'interface 300, le deuxième dispositif de filtrage 301 est avantageusement configuré pour permettre la décomposition du signal sortant RF_out en trois sous-signaux sortants qui sont respectivement acheminés vers la première, deuxième et troisième unité de conversion. Le signal sortant RF_out est décomposé en :
- un premier sous-signal sortant RF_out1, dont la fréquence est située dans une première sous-bande de fréquences, et
- un deuxième sous-signal sortant RF_out2 dont la fréquence est située dans une deuxième sous-bande de fréquences,
- un troisième sous-signal sortant RF_out3 dont la fréquence est située dans une troisième sous-bande de fréquences.

Les première deuxième et troisième sous-bandes de fréquences sont distinctes et sans recouvrement.

De préférence, la première, la deuxième et la troisième sous-bandes de fréquences couvrent la bande de fréquences comprise entre 400 MHz et 6 GHz.

La première unité de conversion 305a convertit le premier sous-signal sortant RF_out1 en un premier signal optique sortant, de longueur d'onde λ2. La deuxième unité de conversion 305b convertit le deuxième sous-signal sortant RF_out2 en un deuxième signal optique sortant, de longueur d'onde λ2. La troisième unité de conversion 305c convertit le troisième sous-signal sortant RF_out3 en un troisième signal optique sortant, de longueur d'onde λ2.

Chaque signal optique sortant est transmis, par une fibre optique associée, au différent boîtier de concentration et de configuration 200. La première fibre optique 400a transporte le premier signal optique sortant, de longueur d'onde λ2 porteur du premier sous-signal sortant RF_out1. La deuxième fibre optique 400b transporte le deuxième signal optique sortant, de longueur d'onde λ1, porteur du deuxième sous-signal sortant RF_out2, comme illustré sur la figure 2. Une troisième fibre optique 400c transporte le troisième signal optique sortant, de longueur d'onde λ2, porteur du troisième sous-signal sortant RF_out3.

Dans le boitier de configuration et de concentration :
- le premier module de conversion 205a reconvertit le premier signal optique sortant de longueur d'onde λ1 en premier sous-signal sortant RF_out1,
- le deuxième module de conversion 205b reconvertit le deuxième signal optique sortant de longueur d'onde λ1 en deuxième sous-signal sortant RF_out2,
- le troisième module de conversion 205c reconvertit le troisième signal optique sortant de longueur d'onde λ1 en troisième sous-signal sortant RF_out3.

Le premier dispositif de recomposition 202 de signal est avantageusement agencé et configuré pour recevoir et multiplexer le premier sous-signal sortant RF_out1, le deuxième sous-signal sortant RF_out2 et le troisième sous-signal sortant RF_out3 en signal sortant RF_out.

Dans ce deuxième mode de réalisation, chaque unité de conversion d'un boîtier d'interface 300 peut comporter un dispositif d'activation/désactivation de la deuxième source laser 315. Le fonctionnement des dispositifs d'activation/désactivation dans le cas où l'infrastructure de transport de données radiofréquences 1 comporte deux boîtiers d'interface 300 et dans le cas où l'infrastructure de transport de données radiofréquences 1 comporte plus de deux boîtiers d'interface 300 est identique à celui du premier mode de réalisation.

## Revendications

1. Infrastructure de transport de données radiofréquences (1) destinée à la transmission de données radiofréquences vers des équipements (103), dans un sens dit du flux descendant, et à la transmission de données radiofréquences depuis les équipements (103), dans un sens dit du flux montant, comportant un boitier de concentration et de configuration (200), N fibres optiques (400a, 400b, 400c) et S boitiers d'interface (300), ledit boitier de concentration et de configuration comportant :
- un premier dispositif de filtrage (201) en fréquence, configuré pour, dans le sens du flux descendant, décomposer un premier signal, dit signal entrant (RF_in), en N sous-signaux, dits sous-signaux entrants (RF_in1, RF_in2, RF_in3), dans N sous-bandes de fréquences distinctes, N entier ≥ 2,
- N modules de conversion de signaux électriques/optiques (205a, 205b, 205c), chaque module de conversion étant configuré, dans le sens du flux descendant, pour convertir respectivement un sous-signal entrant en un signal optique, dit signal optique entrant, de longueur d'onde donnée (λ₁),
ledit boitier de concentration et de configuration étant couplé, via les N fibres optiques (400a, 400b, 400c), aux S boitiers d'interface (300) disposés en série, S entier ≥ 2,
chaque boitier d'interface (300) comportant :
- N coupleurs optiques 1x2 (306a, 306b, 306c),
- N unités de conversion de signaux électriques/optiques (305a, 305b, 305c),
chaque coupleur optique étant configuré, dans le sens du flux descendant, pour transmettre respectivement une partie d'un signal optique entrant à une unité de conversion de signaux électriques/optiques (305a, 305b, 305c), chaque unité de conversion de signaux électriques/optiques (305a, 305b, 305c) étant configurée, dans le sens du flux descendant, pour reconvertir respectivement un signal optique entrant en un sous-signal entrant (RF_in1, RF_in2, RF_in3),
- un dispositif de recomposition de signal, dit deuxième dispositif de recomposition (302), configuré pour recomposer le signal entrant (RF_in) à partir des N sous-signaux entrants (RF_in1, RF_in2, RF_in3) obtenus par les N unités de conversion de signaux électriques/optiques (305a, 305b, 305c).

2. Infrastructure de transport de données radiofréquences (1) selon la revendication précédente dans laquelle chaque module de conversion de signaux électriques/optiques (205a, 205b, 205c) comporte :
- une source laser, dite première source laser (215),
- une photodiode, dite première photodiode (225),
- un multiplexeur en longueur d'onde, dit premier multiplexeur (235).

3. Infrastructure de transport de données radiofréquences (1) selon l'une des revendications précédentes dans laquelle chaque unité de conversion de signaux électriques/optiques (305a, 305b, 305c) comporte :
- une source laser, dite deuxième source laser (315),
- une photodiode, dite deuxième photodiode (325),
- un multiplexeur en longueur d'onde, dit deuxième multiplexeur (335).

4. Infrastructure de transport de données radiofréquences (1) selon la revendication 3 dans laquelle chaque unité de conversion de signaux électriques/optiques (305a, 305b, 305c) comporte un dispositif d'activation/désactivation de la deuxième source laser (315).

5. Infrastructure de transport de données radiofréquences (1) selon l'une des revendications précédentes dans laquelle chaque boitier d'interface (300) comporte un deuxième dispositif de filtrage (301) en fréquence, configuré pour, dans le sens du flux montant, décomposer un deuxième signal, dit signal sortant (RF_out), en N sous-signaux, dits sous-signaux sortants (RF _out1, RF_out2, RF_out3), dans N sous-bandes de fréquences distinctes,
dans laquelle chaque unité de conversion de signaux électriques/optiques est configurée, dans le sens du flux montant, pour convertir respectivement un sous-signal sortant, provenant du deuxième dispositif de filtrage (301), en un signal optique, dit signal optique sortant, de longueur d'onde donnée (λ₂), distincte de la longueur d'onde du signal optique entrant,
dans laquelle chaque signal optique sortant est respectivement transmis, par une fibre optique (400a, 400b, 400c), à un module de conversion de signaux électriques/optiques (205a, 205b, 205c) du boitier de concentration et de configuration (200), chaque module de conversion de signaux électriques/optiques étant configuré, dans le sens du flux montant, pour reconvertir respectivement un signal optique sortant en un sous-signal sortant (RF_out1, RF_out2, RF_out3),
dans laquelle le boitier de concentration et de configuration comporte un dispositif de recomposition de signal, dit premier dispositif de recomposition (202), configuré pour recomposer le signal sortant (RF_out) à partir des N sous-signaux sortants (RF_out1, RF_out2, RF_out3) obtenus par les N modules de conversion de signaux électriques/optiques (205a, 205b, 205c).

6. Infrastructure de transport de données radiofréquences (1) selon la revendications 5 dans laquelle chaque boitier d'interface (300) comporte un duplexeur (309) destiné à être agencé entre le deuxième dispositif de filtrage (301) dudit boitier d'interface et une antenne (104), externe à l'infrastructure de transport de données radiofréquences, associée audit boitier d'interface.

7. Infrastructure de transport de données radiofréquences (1) selon la revendication 6 dans laquelle chaque boitier d'interface comporte un premier amplificateur de gain (307) paramétrable agencé entre le deuxième dispositif de recomposition (302) et le duplexeur (309).

8. Infrastructure de transport de données radiofréquences (1) selon la revendications 5 dans laquelle le premier dispositif de filtrage (201) du boitier de concentration et de configuration (200) et/ou le premier dispositif de recomposition (202) du boitier de concentration et de configuration (200) et/ou le deuxième dispositif de filtrage (301) d'un boitier d'interface (300) et/ou le deuxième dispositif de recomposition (302) d'un boitier d'interface (300) se présente sous la forme d'un diplexeur.

9. Infrastructure de transport de données radiofréquences (1) selon la revendication 5 dans laquelle le premier dispositif de filtrage (201) du boitier de concentration et de configuration (200) et/ou le premier dispositif de recomposition (202) du boitier de concentration et de configuration (200) et/ou le deuxième dispositif de filtrage (301) d'un boitier d'interface (300) et/ou le deuxième dispositif de recomposition (302) d'un boitier d'interface (300) se présente sous la forme d'un triplexeur.

10. Aéronef (100) comportant une infrastructure de transport de données radiofréquences (1) selon l'une des revendications 1 à 9.

## Patentansprüche

1. Infrastruktur für Radiofrequenzdatentransport (1), die zur Übertragung von Radiofrequenzdaten auf Geräte (103) in einer Richtung des sogenannten Abwärtsstroms, und zur Übertragung von Radiofrequenzdaten von den Geräten (103) in einer Richtung des sogenannten Aufwärtsstroms bestimmt ist, ein Konzentrations- und Konfigurationsgehäuse (200), N Glasfasern (400a, 400b, 400c) und S Schnittstellengehäuse (300) beinhaltend, wobei das Konzentrations- und Konfigurationsgehäuse Folgendes beinhaltet:
- eine erste Frequenzfiltervorrichtung (201), die konfiguriert ist, um in der Richtung des Abwärtsstroms ein erstes, sogenanntes Eingangssignal (RF_in) in N Teilsignale, sogenannte Eingangsteilsignale (RF_in1, RF_in2, RF_in3) in N verschiedenen Teilfrequenzbändern, wobei N eine ganze Zahl ≥ 2 ist, zu zerlegen,
- N Umwandlungsmodule von elektrischen/optischen Signalen (205a, 205b, 205c), wobei jedes Umwandlungsmodul in der Richtung des Abwärtsstroms konfiguriert ist, um jeweils ein Eingangsteilsignal in ein optisches Signal, optisches Eingangssignal genannt, mit einer gegebenen Wellenlänge (*λ*₁) umzuwandeln,
wobei das Konzentrations- und Konfigurationsgehäuse über die N Glasfasern (400a, 400b, 400c) mit den S in Reihe angeordneten Schnittstellengehäusen (300), wobei S eine ganze Zahl ≥ 2 ist, gekoppelt ist,
wobei jedes Schnittstellengehäuse (300) Folgendes beinhaltet:
- N optische Koppler 1x2 (306a, 306b, 306c),
- N Umwandlungseinheiten von elektrischen/optischen Signalen (305a, 305b, 305c),
wobei jeder optische Koppler in der Richtung des Abwärtsstroms konfiguriert ist, um jeweils einen Teil eines optischen Eingangssignals an eine Umwandlungseinheit von elektrischen/optischen Signalen (305a, 305b, 305c) zu übertragen, wobei jede Umwandlungseinheit von elektrischen/optischen Signalen (305a, 305b, 305c) in der Richtung des Abwärtsstroms konfiguriert ist, um jeweils ein optisches Eingangssignal zurück in ein Eingangsteilsignal (RF_in1, RF_in2, RF_in3) umzuwandeln,
- eine Signalzusammensetzungsvorrichtung, zweite Zusammensetzungsvorrichtung (302) genannt, die konfiguriert ist, um das Eingangssignal (RF_in) aus den N Eingangsteilsignalen (RF_in1, RF_in2, RF_in3), die von den N Umwandlungseinheiten von elektrischen/optischen Signalen (305a, 305b, 305c) erhalten werden, wieder zusammenzusetzen.

2. Infrastruktur für Radiofrequenzdatentransport (1) nach dem vorstehenden Anspruch, wobei jedes Umwandlungsmodul von elektrischen/optischen Signalen (205a, 205b, 205c) Folgendes beinhaltet:
- eine Laserquelle, erste Laserquelle (215) genannt,
- eine Fotodiode, erste Fotodiode (225) genannt,
- einen Wellenlängen-Multiplexer, erster Multiplexer (235) genannt.

3. Infrastruktur für Radiofrequenzdatentransport (1) nach einem der vorstehenden Ansprüche, wobei jede Umwandlungseinheit von elektrischen/optischen Signalen (305a, 305b, 305c) Folgendes beinhaltet:
- eine Laserquelle, zweite Laserquelle (315) genannt,
- eine Fotodiode, zweite Fotodiode (325) genannt,
- einen Wellenlängen-Multiplexer, zweiter Multiplexer (335) genannt.

4. Infrastruktur für Radiofrequenzdatentransport (1) nach Anspruch 3, wobei jede Umwandlungseinheit von elektrischen/optischen Signalen (305a, 305b, 305c) eine Vorrichtung zum Aktivieren/Deaktivieren der zweiten Laserquelle (315) beinhaltet.

5. Infrastruktur für Radiofrequenzdatentransport (1) nach einem der vorstehenden Ansprüche, wobei jedes Schnittstellengehäuse (300) eine zweite Frequenzfiltervorrichtung (301) beinhaltet, die konfiguriert ist, um in der Richtung des Aufwärtsstroms, ein zweites, sogenanntes Ausgangssignal (RF_out) in N Teilsignale, sogenannte Ausgangsteilsignale (RF_out1, RF_out2, RF_out3) in N verschiedenen Teilfrequenzbändern, zu zerlegen,
wobei jede Umwandlungseinheit von elektrischen/optischen Signalen in der Richtung des Aufwärtsstroms konfiguriert ist, um jeweils ein Ausgangsteilsignal, welches von der zweiten Frequenzfiltervorrichtung (301) kommt, in ein optisches Signal, optisches Ausgangssignal genannt, mit einer gegebenen Wellenlänge (*λ*₂), die sich von der Wellenlänge des optischen Eingangssignals unterscheidet, umzuwandeln,
wobei jedes optische Ausgangssignal jeweils durch eine Glasfaser (400a, 400b, 400c) zu einem Umwandlungsmodul von elektrischen/optischen Signalen (205a, 205b, 205c) des Konzentrations- und Konfigurationsgehäuses (200) übertragen wird, wobei jedes Umwandlungsmodul von elektrischen/optischen Signalen in der Richtung des Aufwärtsstroms konfiguriert ist, um jeweils ein optisches Ausgangssignal zurück in ein Ausgangsteilsignal (RF_out1, RF_out2, RF_out3) umzuwandeln,
wobei das Konzentrations- und Konfigurationsgehäuse eine Signalzusammensetzungsvorrichtung, erste Zusammensetzungsvorrichtung (202) genannt, beinhaltet, die konfiguriert ist, um das Ausgangssignal (RF_out) aus den N Ausgangsteilsignalen (RF_out1, RF_out2, RF_out3), die von den N Umwandlungseinheiten von elektrischen/optischen Signalen (205a, 205b, 205c) erhalten werden, wieder zusammenzusetzen.

6. Infrastruktur für Radiofrequenzdatentransport (1) nach Anspruch 5, wobei jedes Schnittstellengehäuse (300) einen Duplexer (309) beinhaltet, der dazu bestimmt ist, um zwischen der zweiten Filtervorrichtung (301) des Schnittstellengehäuses und einer Antenne (104), außerhalb der Infrastruktur für Radiofrequenzdatentransport, die mit dem Schnittstellengehäuse verknüpft ist, angeordnet zu werden.

7. Infrastruktur für Radiofrequenzdatentransport (1) nach Anspruch 6, wobei jedes Schnittstellengehäuse einen ersten parametrierbaren Verstärker (307) beinhaltet, der zwischen der zweiten Zusammensetzungsvorrichtung (302) und dem Duplexer (309) angeordnet ist.

8. Infrastruktur für Radiofrequenzdatentransport (1) nach Anspruch 5, wobei sich die erste Filtervorrichtung (201) des Konzentrations- und Konfigurationsgehäuses (200) und/oder die erste Zusammensetzungsvorrichtung (202) des Konzentrations- und Konfigurationsgehäuses (200) und/oder die zweite Filtervorrichtung (301) eines Schnittstellengehäuses (300) und/oder die zweite Zusammensetzungsvorrichtung (302) eines Schnittstellengehäuses (300) in Form eines Diplexers darstellt.

9. Infrastruktur für Radiofrequenzdatentransport (1) nach Anspruch 5, wobei sich die erste Filtervorrichtung (201) des Konzentrations- und Konfigurationsgehäuses (200) und/oder die erste Zusammensetzungsvorrichtung (202) des Konzentrations- und Konfigurationsgehäuses (200) und/oder die zweite Filtervorrichtung (301) eines Schnittstellengehäuses (300) und/oder die zweite Zusammensetzungsvorrichtung (302) eines Schnittstellengehäuses (300) in Form eines Triplexers darstellt.

10. Luftfahrzeug (100), das eine Infrastruktur für Radiofrequenzdatentransport (1) nach einem der Ansprüche 1 bis 9 beinhaltet.

## Claims

1. Radio-frequency data transport infrastructure (1) intended for the transmission of radio-frequency data to equipment (103), in a direction "of the downstream flow", and for the transmission of radio-frequency data from the equipment (103), in a direction "of the upstream flow", including a concentration and configuration box (200), N optical fibers (400a, 400b, 400c) and S interface boxes (300), said concentration and configuration box including:
- a first device (201) for frequency filtering, configured to, in the direction of the downstream flow, decompose a first signal, called entering signal (RF_in), into N sub-signals, called entering sub-signals (RF_in1, RF_in2, RF_in3), in N distinct sub-bands of frequencies, N an integer ≥ 2,
- N modules for converting electric/optical signals (205a, 205b, 205c), each conversion module being configured, in the direction of the downstream flow, to respectively convert an entering sub-signal into an optical signal, called entering optical signal, having a given wavelength (λ₁),
said concentration and configuration box being coupled, via the N optical fibers (400a, 400b, 400c), to the S interface boxes (300) disposed in series, S an integer ≥ 2,
each interface box (300) including:
- N 1x2 optical couplers (306a, 306b, 306c),
- N units for converting electric/optical signals (305a, 305b, 305c),
each optical coupler being configured, in the direction of the downstream flow, to respectively transmit a part of an entering optical signal to a unit for converting electric/optical signals (305a, 305b, 305c), each unit for converting electric/optical signals (305a, 305b, 305c) being configured, in the direction of the downstream flow, to respectively reconvert an entering optical signal into an entering sub-signal (RF_in1, RF_in2, RF_in3),
- a signal recomposition device, called second recomposition device (302), configured to recompose the entering signal (RF_in) from the N entering sub-signals (RF_in1, RF_in2, RF_in3) obtained by the N units for converting electric/optical signals (305a, 305b, 305c).

2. Radio-frequency data transport infrastructure (1) according to the previous claim, wherein each module for converting electric/optical signals (205a, 205b, 205c) includes:
- a laser source, called first laser source (215),
- a photodiode, called first photodiode (225),
- a wavelength multiplexer, called first multiplexer (235) .

3. Radio-frequency data transport infrastructure (1) according to one of the previous claims, wherein each unit for converting electric/optical signals (305a, 305b, 305c) includes:
- a laser source, called second laser source (315),
- a photodiode, called second photodiode (325),
- a wavelength multiplexer, called second multiplexer (335) .

4. Radio-frequency data transport infrastructure (1) according to claim 3, wherein each unit for converting electric/optical signals (305a, 305b, 305c) includes a device for activating/deactivating the second laser source (315) .

5. Radio-frequency data transport infrastructure (1) according to one of the previous claims, wherein each interface box (300) includes a second device (301) for frequency filtering, configured to, in the direction of the upstream flow, decompose a second signal, called exiting signal (RF_out), into N sub-signals, called exiting sub-signals (RF_out1, RF_out2, RF_out3), in N distinct sub-bands of frequencies,
wherein each unit for converting electric/optical signals is configured, in the direction of the upstream flow, to respectively convert an exiting sub-signal, coming from the second filtering device (301), into an optical signal, called exiting optical signal, having a given wavelength (λ₂), distinct from the wavelength of the entering optical signal,
wherein each exiting optical signal is respectively transmitted, by an optical fiber (400a, 400b, 400c), to a module for converting electric/optical signals (205a, 205b, 205c) of the concentration and configuration box (200), each module for converting electric/optical signals being configured, in the direction of the upstream flow, to respectively reconvert an exiting optical signal into an exiting sub-signal (RF_out1, RF_out2, RF_out3),
wherein the concentration and configuration box includes a signal recomposition device, called first recomposition device (202), configured to recompose the exiting signal (RF_out) from the N exiting sub-signals (RF_out1, RF_out2, RF_out3) obtained by the N modules for converting electric/optical signals (205a, 205b, 205c).

6. Radio-frequency data transport infrastructure (1) according to claim 5, wherein each interface box (300) includes a duplexer (309) intended to be arranged between the second filtering device (301) of said interface box and an antenna (104), external to the radio-frequency data transport infrastructure, associated with said interface box.

7. Radio-frequency data transport infrastructure (1) according to claim 6, wherein each interface box includes a first parameterisable gain amplifier (307) arranged between the second recomposition device (302) and the duplexer (309).

8. Radio-frequency data transport infrastructure (1) according to claim 5, wherein the first filtering device (201) of the concentration and configuration box (200) and/or the first recomposition device (202) of the concentration and configuration box (200) and/or the second filtering device (301) of an interface box (300) and/or the second recomposition device (302) of an interface box (300) is in the form of a diplexer.

9. Radio-frequency data transport infrastructure (1) according to claim 5, wherein the first filtering device (201) of the concentration and configuration box (200) and/or the first recomposition device (202) of the concentration and configuration box (200) and/or the second filtering device (301) of an interface box (300) and/or the second recomposition device (302) of an interface box (300) is in the form of a triplexer.

10. Aircraft (100) including a radio-frequency data transport infrastructure (1) according to one of claims 1 to 9.
